# EUROPÄISCHE PATENTANMELDUNG

(11) **EP 2 945 031 A1**
(43) Veröffentlichungstag der Anmeldung: **18.11.2015**
(21) Anmeldenummer: 14167951.4
(22) Anmeldetag: 12.05.2014
(51) Int. Cl.: G05B 19/042

(54) **Peripherie-Eingabeeinheit**

(71) Anmelder: Siemens Aktiengesellschaft, 80333 München (DE)
(72) Erfinder: Rottmann, Norbert, 76829 Landau (DE)

(57) **Zusammenfassung**

Die Erfindung betrifft eine Peripherie-Eingabeeinheit (1) für ein Automatisierungsgerät mit zumindest einem Eingangskanal (6, 7) zum Anschließen eines Sensors (8), wobei die Peripherie-Eingabeeinheit (1) dazu ausgebildet ist, ein dem zumindest einen Eingangskanal (6, 7) zugeführtes Sensorsignal zur Bestimmung eines Prozesswertes auszuwerten. Gewöhnlich werden die Eingangskanäle derartiger Eingabeeinheiten zu jedem Zeitpunkt "bestromt" bzw. es werden die Sensorsignale einem diesen Eingangskanälen nachgeschalteten Controller (2) dieser Eingabeeinheit bereitgestellt, was einen hohen Energiebedarf bedeutet. Es werden Maßnahmen vorgeschlagen, wodurch die Eingabeeinheit mit einem verminderten Energiebedarf betrieben werden kann.

## Beschreibung

Die Erfindung betrifft eine Peripherie-Eingabeeinheit für ein Automatisierungsgerät mit zumindest einem Eingangskanal zum Anschließen eines Sensors, wobei die Peripherie-Eingabeeinheit dazu ausgebildet ist, ein dem zumindest einen Eingangskanal zugeführtes Sensorsignal zur Bestimmung eines Prozesswertes auszuwerten.

Eine derartige Peripherie-Eingabeeinheit in Form einer Digitaleingabe-Baugruppe ist aus dem Siemens-Katalog "SIMATIC, ST 70, Automatisierungssystem S7-300, Baugruppendaten", Kapitel 3, Ausgabe 08/2009 bekannt. An einen der Eingangskanäle ist ein einfacher Schalter oder ein Geber anschließbar, z. B. ein Geber in Form eines Bero-Nährungsschalters, der für eine DC-Nennspannung von 24 oder 48 V ausgelegt ist, wobei eine Eingangskennlinie eine so genannte Typ 1- oder Typ 2-Charakteristik gemäß der Norm IEC 61131 bzw. EN 61131 erfüllt.

Diese Norm schreibt für die Typ 1- und Typ 2-Charakteristiken Strom- und Spannungsgrenzen für 0- und 1-Signalzustände vor, wobei die Stromgrenzen gemäß der Typ 2-Charakteristik höher als gemäß der Typ 1-Charakteristik vorgegeben sind. Gemäß der Typ 1-Charakteristik liegt bei einer 24 V-DC-Geberspannung die obere Stromgrenze für einen 1-Signalzustand bei 15 mA, gemäß der Typ 2-Charakteristik dagegen bei 30 mA, was für den Eingangskanal eine Leistungsabgabe von 360 bzw. 720 mW bedeutet.

Im Rahmen der Steuerung eines technischen Prozesses bzw. einer Anlage wird eine Vielzahl derartiger Digitaleingabebaugruppen eingesetzt, die jeweils 32 oder 64 Eingangskanäle aufweisen. Aufgrund dessen, dass die Eingangskanäle der jeweiligen Baugruppe zu jedem Zeitpunkt "bestromt" bzw. Sensorsignale einem diesen Eingangskanälen nachgeschalteten Controller dieser Baugruppe bereitgestellt werden, ist ein hoher Energiebedarf für die Baugruppen erforderlich.

Der Erfindung liegt daher die Aufgabe zugrunde, eine Peripherie-Eingabeeinheit der eingangs genannten Art zu schaffen, welche mit einem verminderten Energiebedarf betrieben werden kann.

Diese Aufgabe wird dadurch gelöst, dass die Peripherie-Eingabeeinheit dazu ausgebildet ist, das Sensorsignal nur für vorgegebene Zeitspannen zu erfassen und auszuwerten, wobei ein für eine der jeweiligen Zeitspannen bestimmter Prozesswert bis zur Bestimmung eines Prozesswertes für eine auf diese eine Zeitspanne folgende Zeitspanne gültig ist.

Die Erfindung geht von der Idee aus, dass es häufig nicht erforderlich ist, alle Eingangs- bzw. Sensorsignale einer Anlage bzw. eines technischen Prozesses zu jedem Zeitpunkt auszuwerten. Beispielsweise ist es nicht notwendig, sofort zu erkennen, ob eine Schaltschranktür geöffnet ist, wodurch nicht jeder Flankenwechsel in diesem als "unkritisch" eingestuften Eingangssignal sofort bzw. zeitnah erkannt werden muss. Ferner ist es z. B. nicht nötig, in einem 100 Millisekunden-Raster ein ebenfalls unkritisches Füllstands-Signal eines Behälters auszuwerten, obwohl der Füllstand dieses Behälters sich nur im Sekundenbereich ändert.

Vorteilhaft ist, dass aufgrund der vorgebbaren oder vorgegebenen Zeitspannen der Energiebedarf bzw. der Energieverbrauch ohne störende Auswirkungen auf die Prozesssteuerung vermindert werden kann. Nur während dieser Zeitspannen bzw. Zeitintervalle wird das Sensorsignal erfasst, auf Flankenwechsel des Sensorsignals außerhalb dieser Zeitspannen wird nicht reagiert. "Unkritische" Sensorsignale werden seltener erfasst und ausgewertet als "kritische" Sensorsignale, was bedeutet, dass mittels der vorgebbaren oder vorgegebenen Zeitspannen der Energiebedarf bzw. Stromverbrauch beeinflusst werden kann.

In einer Ausgestaltung der Erfindung werden die Zeitspannen im Rahmen der Projektierung eingestellt, die Kenntnisse über den zu steuernden technischen Prozess bzw. der zu steuerenden Anlage und damit der auszuwertenden Sensorsignale werden dazu berücksichtigt.

In einer weiteren Ausgestaltung der Erfindung weist die Peripherie-Eingabeeinheit einen steuerbaren Schalter auf, mittels welchem der Sensor mit dem Eingangskanal während der vorgebbaren oder vorgegebenen Zeitspannen verbunden wird und mittels welchem der Sensor von dem Eingangskanal außerhalb dieser Zeitspannen getrennt wird. Durch diese einfache schaltungstechnische Maßnahme werden die Zeitspannen erzeugt bzw. der Eingangskanal "gepulst", d. h. ein Puls-/Pausenverhältnis zur Erfassung des Sensorsignals eingestellt.

Anhand der Zeichnung, in der ein Ausführungsbeispiel der Erfindung veranschaulicht ist, werden im Folgenden die Erfindung, deren Ausgestaltungen sowie Vorteile näher erläutert.

Es zeigen in einer vereinfachten Darstellung
Figur 1 Bestandteile einer Peripherie-Eingabeeinheit und
Figur 2 Erfassungszeiträume.

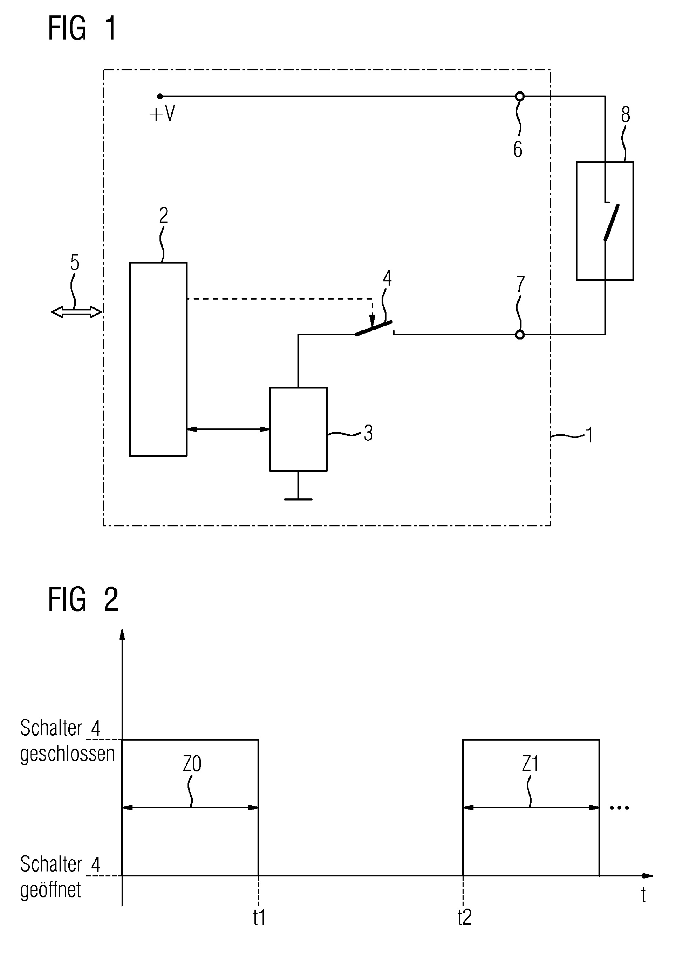

In Figur 1 sind Bestandteile einer mit 1 bezeichneten Peripherie-Eingabeeinheit dargestellt, die mit einem Controller 2, einer Auswerteeinheit 3 sowie mit einem mittels des Controllers 2 steuerbaren Schalters 4 versehen ist. Selbstverständlich weist die Peripherie-Eingabeeinheit 1 weitere elektrische und elektronische Schaltungsteile auf, die allerdings zum Verständnis der Erfindung nicht von Bedeutung sind und daher nicht näher erläutert werden. Die Peripherie-Eingabeeinheit 1 kann in Form einer Analogeingabeeinheit oder in Form einer Digitaleingabeeinheit ausgebildet sein, die in einen Steckplatz eines Automatisierungsgerätes oder in einen Steckplatz einer so genannten "Dezentralen Peripherie" - im Folgenden als Peripheriegerät bezeichnet - gesteckt ist. Dieses Automatisierungs- bzw. Peripheriegerät weist eine Vielzahl von Einheiten bzw. Baugruppen auf, z. B. Baugruppen in Form von CPU- und/oder Kommunikationsbaugruppen, die über einen Rückwandbus 5 miteinander verbunden sind. Im vorliegenden Ausführungsbeispiel wird angenommen, dass die Peripherie-Eingabeeinheit 1 als Digitaleingabeeinheit ausgestaltet ist. An einem Eingangskanal dieser Digitaleingabeeinheit ist an Anschlüssen 6, 7 dieser Einheit ein Geber 8 angeschlossen, der als Schalter ausgebildet ist. Selbstverständlich weist die Digitaleingabeeinheit eine Vielzahl von Eingangskanälen auf, an die jeweils ein Messwertgeber oder Schalter angeschlossen ist.

Der Controller 2 steuert den Schalter 4 derart an, dass die Auswerteeinheit 3 nur für eine vorgegebene Zeitspanne die Schalterstellung des Gebers 8 erfasst. Dazu schließt der Controller 2 während dieser Zeitspannen den steuerbaren Schalter 4, dagegen öffnet der Controller 2 außerhalb dieser Zeitspannen diesen Schalter 4.

Es wird angenommen, dass während einer Zeitspanne 20 (Figur 2) die Schalterstellung des Gebers 8 erfasst wird und der Schalter geschlossen ist, was die Auswerteeinheit 3 aufgrund eines 1-Strompegels erkennt. Die Auswerteeinheit 4 übermittelt dem Controller 2 einen diesem Pegel repräsentierenden Prozesswert, wobei der Controller diesen Prozesswert weiterverarbeitet und als gültiges Eingangssignal bzw. als gültigen Eingangswert interpretiert, bis während einer weiteren Zeitspanne Zl die Schalterstellung des Gebers 4 erneut erfasst wird. Die Schalterstellung zwischen den (Erfassungs-) Zeitspannen 20 und Zl - d.h. zwischen einem Zeitpunkt tl und t2 (Erfassungspause) - bleibt unberücksichtigt. Diese Schalterstellung wird also zwischen diesen Zeitpunkten t1, t2 nicht erfasst und ausgewertet, auch nicht für den Fall, dass die Schalterstellung sich ändert bzw. wechselt. In der entsprechenden Art und Weise bleibt die Schalterstellung während der Erfassungspause vom Zeitpunkt t1 bis zu einem auf den Zeitpunkt t1 folgenden Zeitpunkt unberücksichtigt, ab dem eine hier nicht dargestellte weitere Erfassungszeitspanne beginnt. Dadurch, dass nur während der vorgegebenen Zeitspannen 20, Z1 das Eingangs- bzw. Sensorsignal erfasst wird, wird der Energieverbrauch der Digitaleingabeeinheit vermindert. Die Dauer der Erfassungs-Zeitspannen und Erfassungs-Pausen projektiert ein Anwender mittels eines Engineering-Systems, welches über eine Busverbindung mit einer CPU-Baugruppe des Automatisierungsgerätes und/oder einer Master-Baugruppe des Peripheriegerätes Informationen austauscht. Diese Informationen umfassen die Erfassungs-Zeitspannen und die Erfassungs-Pausen, wobei - wie beschrieben - der Controller 2 entsprechend diesen Zeitspannen und diesen Pausen den steuerbaren Schalter 4 beeinflusst.

## Patentansprüche

1. Peripherie-Eingabeeinheit für ein Automatisierungsgerät mit zumindest einem Eingangskanal (6, 7) zum Anschließen eines Sensors (8), wobei die Peripherie-Eingabeeinheit (1) dazu ausgebildet ist, ein dem zumindest einen Eingangskanal (6, 7) zugeführtes Sensorsignal zur Bestimmung eines Prozesswertes auszuwerten, **dadurch gekennzeichnet, dass** die Peripherie-Eingabeeinheit (1) dazu ausgebildet ist, das Sensorsignal nur für vorgebbare oder vorgegebene Zeitspannen (Z0, Z1) zu erfassen, wobei ein für eine der jeweiligen Zeitspannen (Z0) bestimmter Prozesswert bis zur Bestimmung eines Prozesswertes für eine auf diese eine Zeitspanne (Z0) folgende Zeitspanne (Z1) gültig ist.

2. Peripherie-Eingabeeinheit nach Anspruch 1, **dadurch gekennzeichnet, dass** die vorgegebenen Zeitspannen (Z0, Z1) mittels eines Engineering-Systems projektierbar sind.

3. Peripherie-Eingabeeinheit nach Anspruch 1 oder 2, **dadurch gekennzeichnet, dass** die Peripherie-Eingabeeinheit (1) mit einem steuerbaren Schalter (4) versehen ist
- zum Verbinden des Sensors (8) mit dem Eingangskanal (6, 7) während der Zeitspannen (Z0, Z1) und
- zum Trennen des Sensors (8) vom Eingangskanal (6, 7) außerhalb dieser Zeitspannen (Z0, Z1).
